# EUROPEAN PATENT APPLICATION

(11) **EP 3 447 987 A1**
(43) Date of publication of application: **27.02.2019**
(21) Application number: 17187704.6
(22) Date of filing: 24.08.2017
(51) Int. Cl.: H04L 29/06, H04L 29/08

(54) **A METHOD FOR COMPUTER-ASSISTED DETERMINATION OF ALLOWABLE COMMUNICATIONS THROUGH ONE OR MORE FIREWALLS IN A COMMUNICATION NETWORK**

(71) Applicant: Siemens Aktiengesellschaft, 80333 München (DE)
(72) Inventor: Kröselberg, Dirk, 80469 München (DE); Lachberger, Philipp, 81739 München (DE)

(57) **Abstract**

The invention refers to a method for computer-assisted determination of allowable communications through one or more firewalls (FW1, FW2) in a communication network (NW) which comprises a plurality of nodes (N1, N2, ..., N7) within several network zones (Z1, Z2, ..., Z5) associated with security levels (SL0, ..., SL3), the method comprising the following steps:
a) reading network data (ND) of the communication network (NW), where the network data (ND) include a plurality of communication relations (CR1, CR2, ..., CR6), each communication relation (CR1, CR2, ..., CR6) defining parameters, the parameters comprising a source node and a destination node as well as a communication protocol and the network zones (Z1, Z2, ..., Z5) to which the source node and the destination node belong;
b) reading security level data (SLD) defining the security levels (SL0, ..., SL3) of the respective network zones (Z1, Z2, ..., Z5) in the communication network (NW);
c) reading policy data (PD) describing a security policy (SP) for the communication network (NW), the security policy (SP) comprising a set of security rules depending on the security level (SL0, ..., SL3) of at least one network zone (Z1, Z2, ..., Z5);
d) determining allowable communication relations (CRA) by analyzing the network data (ND), the security level data (SLD) and the policy data (PD), where the allowable communication relations (CRA) are permitted based on the security policy (SP).

## Description

The invention refers to a method for computer-assisted determination of allowable communications through one or more firewalls in a communication network. Furthermore, the invention refers to a corresponding apparatus as well as a computer program product and a computer program.

Current communication networks, particularly for industrial automation systems, are often divided into different zones having different security levels where communications in zones with higher security levels can be trusted more than communications in zones with lower security levels. Between the zones, firewalls control the data traffic. Up to now, those firewalls need to be configured manually in order to comply with a given security policy with respect to communications between network zones.

Network products are available that monitor already ongoing network traffic in communication networks and have the capability to propose firewall rule sets based on the monitored communication. However, those products only apply when a network is already in operation. Furthermore, those products are not able to determine whether a monitored communication should be allowed in the communication network or not.

It is an object of the invention to provide a computer-assisted method for automatically determining communications through one or more firewalls in a communication network, where the determined communications are compliant with a security policy.

This object is solved by the independent patent claims. Preferred embodiments of the invention are defined in the dependent claims.

The method of the invention enables a computer-assisted determination of allowable communications through one or more firewalls in a communication network which is preferably an IP based communication network. The network comprises a plurality of nodes within several network zones, each network zone being associated with a security level, where the communications between the network zones go through the one or more firewalls. The method of the invention can be applied to a real deployed communication network. However, the invention may also be applied to a network not yet deployed which is appropriately described by digital data.

The method comprises steps a) to d) which are described in the following. Those steps are performed automatically by the use of a computer. In case that steps of the invention or preferred embodiments refer to the reading of data, this means that corresponding digital data are provided as input data to the method.

In step a), network data of the communication network are read, where the network data include a plurality of communication relations, each communication relation defining parameters, the parameters comprising a source node and a destination node (i.e. corresponding address information of the source node and the destination node) having a communication link therebetween as well as a communication protocol used for the communication link and the network zones to which the source node and the destination node belong. As the communication relations refer to communication links between nodes, those relations define a communication which is physically possible between the nodes but which may not be allowable, e.g. due to security constraints.

In step b), security level data defining the security levels of the respective network zones in the communication network are read. In step c), policy data describing a security policy for the communication network are read, the security policy comprising a set of security rules for communications in the communication network, the set of security rules depending (inter alia) on the security level of at least one network zone.

Security policies with corresponding rules are well-known in the prior art. In the method of the invention, the security policy, i.e. at least one rule of the policy, depends on the security level of at least one network zone. Examples of policy rules may be as follows:
- the communication of a specific protocol is allowed only between two trusted zones, where a trusted zone is a zone with a specific security level or higher,
- the communication of a specific protocol is allowed only between two trusted zones, where the security level of the destination zone is the same or higher than the security level of the source zone,
- for TLS (transport layer security) protocol communication, only cipher suites included in a whitelist defined by the security policy are allowed for a specific security level or higher.

The above rules are only examples and other appropriate rules may be used as well. In the detailed description, an example of another security policy is given.

In step d), allowable communication relations out of the plurality of communication relations are determined by analyzing the network data, the security level data and the policy data, where the allowable communication relations are permitted based on the security policy. In other words, step d) refers to the mapping of the network data and the security level data to the policy data in order to derive policy-compliant and thus allowable communication relations. The allowable communication relations represent the allowable communications determined by the method of the invention.

The invention has the advantage that policy-compliant communication rules in the form of allowable communication relations can be automatically derived for a network comprising several security zones. The policy-compliant rules can then be used to generate configuration data for firewalls compliant with the security policy or to verify already existing configuration data of firewalls in order to check their compliance with the security policy.

In a preferred embodiment of the invention, one or more communication relations of the plurality of communication relations refer to a communication link comprising at least one external communication path lying outside the network zones, where a security level is assigned to a respective external communication path and where the security policy depends on the security level of at least one external communication path. In this embodiment, the method of the invention includes the additional step of reading path data comprising the external communication path or communication paths and the respective security levels of the respective external communication paths. This embodiment enables to consider security policies depending on external communication paths.

In another variant of the invention, one or more communication relations and particularly each communication relation of the plurality of communication relations additionally define as a parameter a communication class to which the respective communication relation belongs, where the security policy depends on the communication class of at least one communication relation. In the detailed description, several examples of communication classes are given. This embodiment enables to consider communication classes or communication types within the security policy.

In a preferred embodiment, the method of the invention not only considers security levels for network zones but also security levels for single network nodes. To do so, the security level data additionally define security levels for respective network nodes of at least a part of the network nodes in the communication network, where the security policy depends on the security level for at least one network node.

In a particularly preferred embodiment of the invention, the method comprises the additional step of calculating configuration data for the one or more firewalls based on the allowable communication relations. In other words, the allowable communication relations are translated in corresponding configuration data which are understandable by the respective firewall. Hence, policy-compliant configuration data can be automatically generated. If the network is a real network, those configuration data are preferably transferred to the one or more firewalls of this real network. This results in a security-compliant configuration of the real network.

In another embodiment of the invention, the method comprises the following additional steps:
- reading configuration data out of at least one firewall of the one or more firewalls;
- extracting communication relations out of the configuration data, where the extracted communication relations are permitted based on the configuration data;
- verifying whether the extracted communication relations correspond with the allowable communication relations determined in step d).

This embodiment allows a verification whether already existing configuration data in firewalls of a real network comply with a security policy. If not, i.e. in case that there are differences between the extracted and the allowable communication relations, appropriate counter measures can be taken. E.g., an alarm may be output to notify a user or configuration data based on the allowable communication relations are transferred to the firewall in order to replace the current configuration data.

In a particularly preferred embodiment, the method of the invention is used for a communication network in an industrial automation system. The automation system may be any industrial system controlling a process automatically. E.g., the automation system may be an electric power generation and/or distribution system, particularly a substation automation system, or a production automation system for producing a product.

Besides the above method, the invention refers to an apparatus for computer-assisted determination of allowable communications through one or more firewalls in a communication network which comprises a plurality of nodes within several network zones, each network zone being associated with a security level, where the communications between the network zones go through the one or more firewalls. This apparatus comprises the following means:
- a means for reading network data of the communication network, where the network data include a plurality of communication relations, each communication relation defining parameters, the parameters comprising a source node and a destination node having a communication link therebetween as well as a communication protocol used for the communication link and the network zones to which the source node and the destination node belong;
- a means for reading security level data defining the security levels of the respective network zones in the communication network;
- a means for reading policy data describing a security policy for the communication network, the security policy comprising a set of security rules for communications in the communication network, the set of security rules depending on the security level of at least one network zone;
- a means for determining allowable communication relations out of the plurality of communication relations by analyzing the network data, the security level data and the policy data (PD), where the allowable communication relations are permitted based on the security policy.

In a preferred embodiment, the above apparatus is configured to perform one or more preferred variants of the method according to the invention.

The invention also comprises a computer program product with program code, which is stored on a machine-readable carrier, for carrying out the method according to the invention or one or more preferred embodiments of this method when the program code is executed on a computer.

Furthermore, the invention refers to a computer program with a program code for carrying out the method according to the invention or one or more preferred embodiments of this method when the program code is executed on a computer.

In the following, an embodiment of the invention will be described in detail with respect to the accompanying drawings wherein:
- Fig. 1: shows a communication network for which a method according to an embodiment of the invention is performed; and
- Fig. 2: shows a flow chart indicating the steps of a method according to an embodiment of the invention.

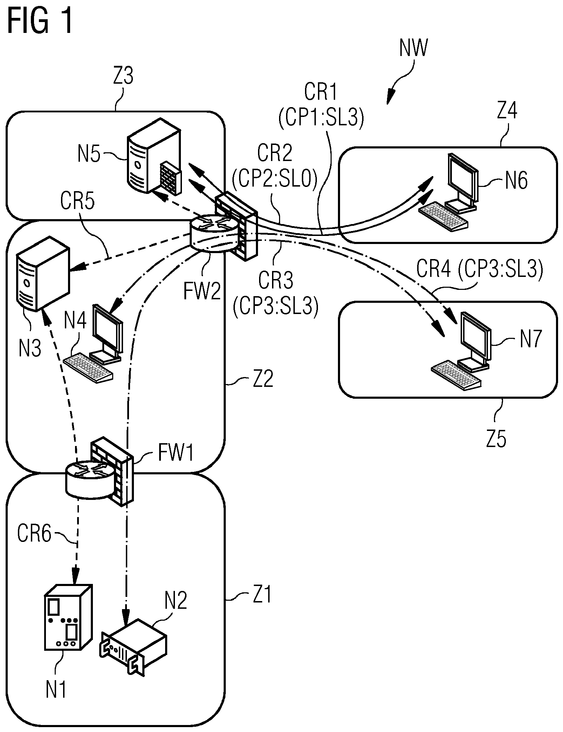

Fig. 1 shows a communication network NW which has a design compliant with the standard IEC 62443 referring to the security of industrial communication networks. The network is used for controlling a substation automation system in a power grid and it comprises several zones Z1, Z2, Z3, Z4 and Z5. Security levels (abbreviated SL) with corresponding numbers are assigned to the zones, where a higher number of the security level denotes a higher security of the corresponding zone with respect to security attacks of third parties. In other words, zones with higher security levels can be trusted more than zones with lower security levels. The security levels can be defined according to the standard IEC 62443-3-3.

In scenario of Fig. 1, the zone Z1 has the security level SL3, the zone Z2 the security level SL2, the zone Z3 the security level SL2, the zone Z4 the security level SL0 and the zone Z5 the security level SL2. The network comprises several nodes N1, N2, N3, ..., N7 which refer to different components in the automation system. Furthermore, the network comprises two firewalls FW1 and FW2. For ease of understanding, only a low number of nodes is shown in Fig. 1. In a real substation automation system, the number of nodes is higher.

In the network of Fig. 1, the zone Z1 is directly connected to the zone Z2 via the firewall FW1. The zone Z1 comprises the nodes N1 and N2. In the embodiment described herein, those nodes refer to different field devices in the substation automation system, such as protection relays, IEDs (IED = Intelligent Electronic Device) and the like. The zone Z2 comprises the nodes N3 and N4. In the embodiment described herein, the node N3 refers to a time server for generating a time signal in the automation system whereas the node N4 refers to a computer with a local user control system. The zone Z2 is directly connected to the zone Z3 via the firewall FW2. The zone Z3 refers to a so-called demilitarized zone comprising the server N5 providing an access control to the network.

The network NW further comprises the zones Z4 and Z5. In contrast to the zones Z1, Z2 and Z3, those zones are not directly connected to another zone. Instead, the connections to the other zones comprise an external communication path not belonging to any zone. The communications between each of the zones Z4 and Z5 and the other zones run over the firewall FW2. The zone Z4 comprises a node N6 for a remote access to the substation automation system. The zone Z5 comprises a node N7 which is a control center of the substation automation system. The communications between the nodes of the network are described by communication relations CR1, CR2, ..., CR6. The information about those communication relations are stored as digital data. The following table 1 indicates the stored information with respect to the communication relations CR1 to CR6.

**Table 1**

| Communication Relation | Source Zone | Source Node | Port of Source Node | Destina tion Zone | Destina tion Node | Port of Dest. Node | Proto col | Class |
|---|---|---|---|---|---|---|---|---|
| CR1 | Z4 (SL0) | N6 | - | Z3 (SL2) | N5 | 3389 | RDP/ IPsec | M |
| CR2 | Z4 (SL0) | N6 | - | Z3 (SL2) | N5 | 3389 | RDP | M |
| CR3 | Z1 (SL3) | N2 | - | Z5 (SL2) | N7 | 2404 | IEC60 870-5-104 | P |
| CR4 | Z2 (SL2) | N4 | - | Z5 (SL2) | N7 | 2404 | IEC60 870-5-104 | P |
| CR5 | Z2 (SL2) | N3 | 123 | Z3 (SL2) | N5 | 123 | NTP | N |
| CR6 | Z2 (SL2) | N3 | 123 | Z1 (SL3) | N1 | 123 | NTP | N |

The communication relations represent unidirectional communication links. The communication relations CR1 and CR2 refer to a remote access to the substation automation system. The communication relations CR3 and CR4 refer to automation signaling between the substation automation system and an external control center. The communication relations CR5 and CR6 refer to the transmission of time signals.

As can be seen from the above table, each communication relation is specified by a source node and the source zone to which the source node belongs as well as a port of the source node. Furthermore, each communication relation includes a destination node and a destination zone to which the destination node belongs as well as a port of the destination node. Furthermore, each communication relation indicates the communication protocol used between the source node and the destination node as well as a communication class out of the classes M, E, P, N where the class E does not occur in the above table. Those classes will be explained later on.

For ease of understanding, the source nodes and the destination nodes in table 1 are indicated by the respective reference numerals of Fig. 1. In a real implementation, the source nodes and destination nodes are specified by corresponding IP addresses within the network. The ports of the source nodes in table 1 include for some communication relations no port number. This means that the port of the corresponding source node is a dynamic port not having a fixed port number. Furthermore, the security levels of the different zones are indicated in parentheses in table 1. In a real implementation, this information is stored in digital form in a separate table. The following table 2 shows such a separate table.

**Table 2**

| Zone | Security Level |
|---|---|
| Z1 | SL3 |
| Z2 | SL2 |
| Z3 | SL2 |
| Z4 | SL0 |
| Z5 | SL2 |

The communication relations CR1 to CR6 are indicated in Fig. 1 by corresponding double arrows between the source node and the destination node. The double arrows with a solid line refer to communication relations of the communication class M, the double arrows with a dashed line refer to communication relations of the communication class N and the double arrows with a dash-dotted line refer to communication relations of the communication class P. The communication classes will be described in the following.

The communication class M refers to management/maintenance communications with respect to the IT administration without being directly related to the automation system. For example, a communication in class M may refer to the configuration of an operating system or the configuration of switches.

The communication class E refers to engineering communications with respect to functions of the automation system, such as electric parameters in the system. The communication in class E can be used to configure components of the automation system.

The communication class P refers to process communications for controlling the technical process performed by the automation system, i.e. this communication has a relation to the automation system. Contrary to that, the communication class N refers to network communications with no direct relation to the automation system. E.g., IP addresses may be assigned or switches and routers may be monitored via communications in class N.

As shown in Fig. 1, the communication relation CR1 comprises the source node N6 and the destination node N5. This communication relation uses the communication protocol RTP/IPsec which is regarded as a protected protocol communication in the security policy SP which will be described later on. The communication relation CR2 has the same source node and the same destination node as the communication relation CR1. However, the communication protocol for this communication relation is RDP which is regarded as an unprotected protocol communication in the security policy SP described later on. Both communication relations CR1 and CR2 run through the firewall FW2.

The communication relation CR3 has node N2 as a source node and node N7 as a destination node. The communication based on this communication relation runs through both firewalls FW1 and FW2 and uses the protocol IEC 60870-5-104. This communication protocol is regarded as an unprotected protocol communication in the security policy SP described later on.

The communication relation CR4 has node N4 as a source node and node N7 as a destination node. The communication of this communication relation runs via the firewall FW2. The communication protocol for this communication is once again IEC 60870-5-104.

The communication relation CR5 has node N3 as a source node and node N5 as a destination node. The communication of this communication relation runs over the firewall FW2 and uses the protocol NTP (NTP = Network Time Protocol) which is regarded as an unprotected protocol communication in the security policy SP described later on.

The communication relation CR6 has node N3 as a source node and node N1 as a destination node. The communication of this communication relation runs over the firewall FW1 and uses the unprotected communication protocol NTP.

In the network of Fig. 1, some communication relations, namely the communication relations CR1, CR2, CR3 and CR4, additionally comprise external communication paths not belonging to specific network zones. There are three different external communication paths, namely CP1, CP2 and CP3. Security levels are also assigned to those communication paths. The communication paths CP1 and CP2 run between the network zones Z3 and Z4. The communication path CP1 is used by the communication relation CR1 and has a high security level SL3 due to the use of IPsec. The communication path CP2 is used by the communication relation CR2 and has a low security level SL0 as IPsec is not used for this path. The communication path CP3 is located between zones Z3 and Z5 and is used by the communication relations CR3 and CR4. This path has a high security level SL3. This is because the part of the communication between firewall FW2 and node N7 is protected by IPsec.

The communication paths with their security levels are also used in the security policy SP described later on. In this security policy, unprotected communication paths are paths which have the security level SL0. The information about the communication paths and their security levels are provided as digital data on the basis of the following table 3.

**Table 3**

| Zone A | Zone B | Communication Path | Security Level of Communication Path |
|---|---|---|---|
| Z3 | Z4 | CP1 (RDP/IPsec) | SL3 |
| Z3 | Z4 | CP2 (RDP) | SL0 |
| Z3 | Z5 | CP3 | SL3 |

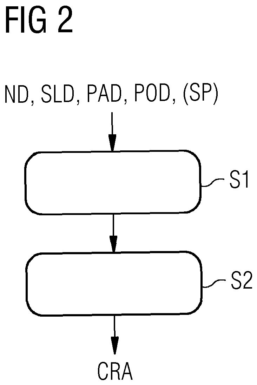

In the following, an embodiment of the invention for configuring the firewalls FW1 and FW2 will be described with reference to Fig. 2. For the configuration, a user has a software-tool on a computer which has access to digital information with respect to the network as well as about the security policy which shall be implemented in a network. The software-tool enables the automatic implementation of the security policy by generating configuration data for the firewalls FW1 and FW2 which conform with the policy.

In step S1 of Fig. 2, digital information about the network, the security levels of the network zones, the policy as well as about the external communication paths is read by the above mentioned software-tool. In particular, the following information is read in this step:
- digital network data ND comprising the information of the above table 1;
- security level data SLD comprising the information of the above described table 2;
- path data PAD comprising the information of the above table 3;
- policy data POD comprising a security policy SP which specifies several security rules where the rules inter alia refer to security levels of network zones as well as security levels of external communication paths.

An example of a security policy SP based on three rules is given in textual form in the following:
Rule 1: Block all unprotected protocol communications to and from zones with SL2 and higher that pass through unprotected external communication paths.
Rule 2: Block all unprotected protocol communications from zones with SL3 to zones with a security level lower than SL3.
Rule 3: Block all network related communications (i.e. communications of class N) between zones of security level SL3 and zones of a security level lower than SL3.

As described above, the communication protocols RDP, IEC 60870-5-104 and NTP refer to unprotected protocol communications whereas the communication protocol RDP/IPsec refers to a protected protocol communication. Furthermore, an external communication path with the security level SL0 is regarded as unprotected whereas communication paths with a higher security level are regarded as protected.

According to step S2 of Fig. 2, the network data ND, the security level data SLD as well as the path data PAD, i.e. tables 1 to 3, are mapped to the above security policy comprising rules 1 to 3. Based on this mapping, it is determined which of the above communication relations CR1 to CR6 are permitted or allowable based on the security policy. A skilled person can implement this mapping based on his expert knowledge so that a detailed description of this mapping will not be given.

As a result of this mapping, the communication relation CR2 is regarded as non-allowable because the above rule 1 applies to this communication relation. Furthermore, the communication relation CR3 is regarded as non-allowable because rule 2 applies to this communication relation. Moreover, the communication relation CR6 is regarded as non-allowable because rule 3 applies to this communication relation. In other words, the communication relations CR1, CR4 and CR5 are regarded as allowable based on the above security policy. Those communication relations refer to communications only passing through firewall FW2. The allowable communication relations are designated as CRA in the diagram of Fig. 2.

In the embodiment described herein, the firewalls of the network NW are configured based on the allowable communication relations. To do so, based on the allowable communication relations, concrete configuration data are generated for the respective firewalls. In other words, the information with respect to the allowable communication relations is translated into configuration data understandable by the respective firewall. A skilled person can implement this translation step based on his expert knowledge so that this step is not described in detail. The translated configuration data are then transmitted to the respective firewalls. As a result, the firewall FW2 will allow the communication relations CR1, CR4 and CR5 and block the other communication relations CR2, CR3 and CR6. Contrary to that, the firewall FW1 will not allow communications based on the communication relations CR3 and CR6 going through this firewall because those communication relations do not comply with the security policy.

In the embodiment described above, the information about the allowable communication relations is used for configuring firewalls of a network. However, this information may also be used in order to verify whether existing configuration data in the firewalls comply with a security policy. To do so, the configuration data of the firewalls are exported therefrom and translated into communication relations on the basis of the above table 1. A skilled person can implement this translation step based on his expert knowledge. After that, the translated communication relations are compared with the allowable communication relations. In case that the translated communication relations differ from the allowable communication relations, appropriate counter measures can be taken, e.g. an alarm signal may be given to a user in order to indicate that a specific firewall does not comply with the security policy.

The invention as described in the foregoing has several advantages. Particularly, policy-compliant communication rules are automatically generated for firewalls in a network having zones with different security levels. Therefore, a manual or semi-automated configuration of firewalls can be avoided. Such a configuration is error-prone and increasingly complex for larger networks. Moreover, the method of the invention may provide an automatic verification of existing configuration data in firewalls in order to check their compliance with a security policy.

## Claims

1. A method for computer-assisted determination of allowable communications through one or more firewalls (FW1, FW2) in a communication network (NW) which comprises a plurality of nodes (N1, N2, ..., N7) within several network zones (Z1, Z2, ..., Z5), each network zone (Z1, Z2, ..., Z5) being associated with a security level (SL0, ..., SL3), where the communications between the network zones (Z1, Z2, ..., Z5) go through the one or more firewalls (FW1, FW2), the method comprising the following steps:
a) reading network data (ND) of the communication network (NW), where the network data (ND) include a plurality of communication relations (CR1, CR2, ..., CR6), each communication relation (CR1, CR2, ..., CR6) defining parameters, the parameters comprising a source node and a destination node having a communication link therebetween as well as a communication protocol used for the communication link and the network zones (Z1, Z2, ..., Z5) to which the source node and the destination node belong;
b) reading security level data (SLD) defining the security levels (SL0, ..., SL3) of the respective network zones (Z1, Z2, ..., Z5) in the communication network (NW);
c) reading policy data (PD) describing a security policy (SP) for the communication network (NW), the security policy (SP) comprising a set of security rules for communications in the communication network (NW), the set of security rules depending on the security level (SL0, ..., SL3) of at least one network zone (Z1, Z2, ..., Z5);
d) determining allowable communication relations (CRA) out of the plurality of communication relations (CR1, CR2, ..., CR6) by analyzing the network data (ND), the security level data (SLD) and the policy data (PD), where the allowable communication relations (CRA) are permitted based on the security policy (SP).

2. The method according to claim 1, wherein one or more communication relations (CR1, CR2, ..., CR6) of the plurality of communication relations (CR1, CR2, ..., CR6) refer to a communication link comprising at least one external communication path (CP1, CP2, CP3) lying outside the network zones (Z1, Z2, ..., Z5), where a security level (SL0, ..., SL3) is assigned to a respective external communication path (CP1, CP2, CP3) and where the security policy (SP) depends on the security level of at least one external communication path (CP1, CP2, CP3), where the method includes the additional step of reading path data (PAD) comprising the external communication path or communication paths (CP1, CP2) and the respective security levels (SL0, ..., SL3) of the respective external communication paths (CP1, CP2, CP3).

3. The method according to claim 1 or 2, wherein one or more communication relations (CR1, CR2, ..., CR6) and particularly each communication relation (CR1, CR2, ..., CR6) of the plurality of communication relations (CR1, CR2, ..., CR6) additionally define as a parameter a communication class to which the respective communication relation (CR1, CR2, ..., CR6) belongs, where the security policy (SP) depends on the communication class of at least one communication relation (CR1, CR2, ..., CR6).

4. The method according to one of the preceding claims, wherein the security level data (SLD) additionally define security levels (SL0, ..., SL3) for respective network nodes (N1, N2, ..., N7) of at least a part of the network nodes (N1, N2, ..., N7) in the communication network (NW), where the security policy (SP) depends on the security level (SL0, ..., SL3) for at least one network node (N1, N2, ..., N7).

5. The method according to one of the preceding claims, wherein the method comprises the additional step of calculating configuration data for the one or more firewalls (FW1, FW2) based on the allowable communication relations (CRA).

6. The method according to claim 5, wherein the configuration data are transferred to the one or more firewalls (FW1, FW2).

7. The method according to one of the preceding claims, wherein the method comprises the following additional steps:
- reading configuration data out of at least one firewall (FW1, FW2) of the one or more firewalls (FW1, FW2);
- extracting communication relations out of the configuration data, where the extracted communication relations are permitted based on the configuration data;
- verifying whether the extracted communication relations correspond with the allowable communication relations (CRA) determined in step d).

8. The method according to one of the preceding claims, wherein the communication network (NW) is a communication network in an industrial automation system.

9. The method according to claim 8, wherein the automation system is an electric power generation and/or distribution system, particularly a substation automation system, or a production automation system.

10. An apparatus for computer-assisted determination of allowable communications through one or more firewalls (FW1, FW2) in a communication network (NW) which comprises a plurality of nodes (N1, N2, ..., N7) within several network zones (Z1, Z2, ..., Z5), each network zone (N1, N2, ..., N7) being associated with a security level, where the communications between the network zones (Z1, Z2, ..., Z5) go through the one or more firewalls (FW1, FW2), wherein the apparatus comprises:
- a means for reading network data (ND) of the communication network (NW), where the network data (ND) include a plurality of communication relations (CR1, CR2, ..., CR6), each communication relation (CR1, CR2, ..., CR6) defining parameters, the parameters comprising a source node and a destination node having a communication link therebetween as well as a communication protocol used for the communication link and the network zones (Z1, Z2, ..., Z5) to which the source node and the destination node belong;
- a means for reading security level data (SLD) defining the security levels (SL0, ..., SL3) of the respective network zones (Z1, Z2, ..., Z5) in the communication network (NW) ;
- a means for reading policy data (PD) describing a security policy (SP) for the communication network (NW), the security policy (SP) comprising a set of security rules for communications in the communication network (NW), the set of security rules depending on the security level (SL0, ..., SL3) of at least one network zone (Z1, Z2, ..., Z5) ;
- a means for determining allowable communication relations out of the plurality of communication relations (CR1, CR2, ..., CR6) by analyzing the network data (ND), the security level data (SLD) and the policy data (PD), where the allowable communication relations are permitted based on the security policy (SP).

11. The apparatus according to claim 10, wherein the apparatus is configured to perform a method according to one of claims 2 to 9.

12. A computer program product with program code, which is stored on a machine-readable carrier, for carrying out a method according to one of claims 1 to 9 when the program code is executed on a computer.

13. A computer program with program code for carrying out a method according to one of claims 1 to 9 when the program code is executed on a computer.
